# EUROPÄISCHE PATENTSCHRIFT

(11) **EP 3 398 487 B1**
(45) Veröffentlichungstag und Bekanntmachung des Hinweises auf die Patenterteilung: **09.03.2022**
(21) Anmeldenummer: 17169251.0
(22) Anmeldetag: 03.05.2017
(51) Int. Cl.: A47J 31/44, A47J 31/54

(54) **VERFAHREN UND VORRICHTUNG ZUR ERZEUGUNG VON MILCHSCHAUM**
METHOD AND DEVICE FOR PRODUCING MILK FOAM
PROCÉDÉ ET DISPOSITIF DESTINÉS À LA PRODUCTION DE MOUSSE DE LAIT

(43) Veröffentlichungstag der Anmeldung: 07.11.2018
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A2- 1 593 330
- WO-A1-2008/083941
- WO-A1-2008/120991
- DE-B3-102014 216 534
- DE-U1-202011 110 158
- US-A1- 2014 299 001

## Beschreibung

### Technisches Gebiet der Erfindung

Die Erfindung beschreibt ein Verfahren zur Erzeugung von Milchschaum mit einstellbarer Temperatur und eine Vorrichtung zur Erzeugung von Milchschaum mit einstellbarer Temperatur.

### Stand der Technik

Die Erzeugung von Milchschaum, d.h. eines relativ stabilen Gemischs aus Milch bzw. Milchersatz und Luft oder Gas, welches gegebenenfalls erwärmt ist, ist allgemein bekannt und in vielfältiger Weise in diversen Kaffeemaschinen eingesetzt.

So beschreibt WO 2008/083941 A1 ein Verfahren und eine Vorrichtung zum Erzeugen von Milchschaum, bei der eine einzige Pumpe sowohl zum Fördern von Milch als auch zum Ansaugen der zum Erzeugen von Milchschaum notwendigen Luft vorgesehen ist und wobei das Gemisch stromabwärts der Pumpe über eine Drosselstelle einem Auslass zugeleitet wird. Zur Erzeugung von warmem Milchschaum wird das Milch-Luftgemisch nach der Drosselstelle mittels eines vorgesehenen Ventils über einen in einem parallelen Leitungsabschnitt angeordneten Durchlauferhitzer erwärmt und zum Auslass gefördert.

Aus DE 10 2014 216 534 B3 ist eine Vorrichtung und ein Verfahren zum Aufschäumen von Milch bekannt, welche mit Luft vermischt von einer Förderpumpe zu einem Auslass gefördert wird und wobei druckseitig der Förderpumpe mindestens eine Drossel und ein Durchlauferhitzer angeordnet sind. Die Vorrichtung ist in einem Kaltschaummodus und in einem Warmschaummodus betreibbar. In dem Warmschaummodus aktiviert eine Steuereinheit den stromabwärts der Drossel angeordneten Durchlauferhitzer und stellt einen vorbestimmten Durchflussquerschnitt an der Drossel ein, welcher sich von demjenigen im Kaltschaummodus unterscheidet.

Aus EP 1 593 330 A2 ist ein Verfahren und eine Vorrichtung zur Erzeugung von Milchschaum bekannt, wobei die Milch, angereichert mit Luft oder Gas, über einen Durchlauferhitzer und eine davon stromabwärts angeordnete Drosselstelle einem Auslass zugeleitet wird. Bedingt durch die Anordnung der Drosselstelle stromabwärts der Pumpe ist das Druckverhältnis im Durchlauferhitzer nicht dahingehend optimiert, die Erzeugung von grossen Luftblasen einzudämmen.

Aus US 2014/299001 A1 ist ein System zur Erzeugung von Milchschaum bekannt, wobei auf der Saugseite einer Förderpumpe Milchschaum erzeugt wird, welcher auf der Druckseite der Förderpumpe mittels Dampf in einem Dampfinjektor erhitzt wird. In dem System ist zwischen Förderpumpe und Erhitzer und/oder zwischen Erhitzer und Auslasseinrichtung ein zusätzlicher hydraulischer Widerstand angeordnet.

Aus DE 20 2011 110158 U1 ist ein System zum Schäumen von Flüssigkeit bekannt, welches ein Milch-/Luftgemisch mittels einer Pumpe über eine Heizeinrichtung einer Auslasseinrichtung zuleitet. Vorgesehen ist zumindest in der Auslasseinrichtung ein Strömungswiderstand, welcher bewegliche Widerstandselemente umfasst, die bei Druckbeaufschlagung durch das Milch-/Luftgemisch relativ zueinander beweglich sind und in der Auslasseinrichtung das Milch-/Luftgemisch in Milchschaum umwandeln.

Aus WO 2008/120991 ist zur Erhitzung von Wasser und der Erzeugung von Wasserdampf in Zusammenhang mit der Kaffee- und/oder Teezubereitung ein Durchlauferhitzer bekannt, ausgebildet als Dickschichtheizung.

Die bekannten Systeme zur Erzeugung von Milchschaum variierender Temperatur umfassen im Allgemeinen eine Förderpumpe zum Ansaugen von Milch oder allgemein der aufzuschäumenden Flüssigkeit aus einem Behälter und Fördern derselben durch ein Leitungssystem zu einem Auslass. Ferner sind eine beispielsweise regelbare Luftzufuhreinrichtung und eine Temperiereinrichtung vorgesehen, um die Milch bzw. das Milch-Luftgemisch nach Bedarf auf eine einstellbare Temperatur zu temperieren.

Im Allgemeinen findet schon beim Zuführen von Luft in einen Milchfluss ein erster Schaumbildungsschritt statt, welcher einen groben, polydispersen Vorschaum erzeugt. Zur Erzeugung eines möglichst homogenen, monodispersen Schaums sind Druckerhöhungselemente bzw. Drosseleinrichtungen oder Widerstandsdurchlasselemente bekannt, welche eingerichtet sind, um durch Erzeugung von Gegendruck aus einem Milch-Luftgemisch einen Schaum zu erzeugen, in dem die Luft in Form von Blasen mit einer gewissen Grössenverteilung dispergiert. Anstelle eines Druckerhöhungselements kann ein Mischelement vorgesehen sein, welches den durchfliessenden Strom in Teilströme aufteilt und eine Vermischung der Teilströme derart vorsieht, dass ein Milchschaum entsteht.

### Zusammenfassung der Erfindung

Aufgabe der vorliegenden Erfindung ist es, ein Verfahren und eine Vorrichtung zur Erzeugung von Milchschaum mit einstellbarer Temperatur zur Verfügung zu stellen, wobei auf einfache Weise unabhängig von der Temperatur die Konsistenz und die Qualität des erzeugten Schaums gegenüber den bekannten Verfahren und Vorrichtungen verbessert ist. Das erfindungsgemässe Verfahren ist vorzugsweise zur Erzeugung von Milchschaum mit einstellbarer Temperatur mittels der erfindungsgemässen Vorrichtung ausgebildet.

In der vorliegenden Erfindung wird der Begriff Milch-/Luftgemisch bzw. Milch-Luft-Emulsion im Sinne eines allgemeinen Begriffes verwendet, wobei damit auch Milchschaum umfasst ist. Milchschaum weist eine Struktur der Eiweisse und Fette auf, welche Luft- bzw. Gasbläschen umschliesst. Der Schaum ist im Sinne der vorliegenden Erfindung von verbesserter Konsistenz und Qualität, wenn ein homogener, stabiler Schaum erzeugt wird. Unter dem Begriff "stabiler Schaum" wird ein Schaum mit möglichst gleichmässiger Blasenverteilung während der gesamten Bezugszeit verstanden.

Diese Aufgabe wird durch ein Verfahren zur Erzeugung von Milchschaum gemäss Anspruch 1 gelöst, sowie durch eine Vorrichtung gemäss Anspruch 2. Vorteilhafte Ausgestaltungsvarianten des Verfahrens und der erfindungsgemässen Vorrichtung sind den abhängigen Ansprüchen zu entnehmen.

Das erfindungsgemässe Verfahren zur Erzeugung von Milchschaum mit einstellbarer Temperatur sieht vor, dass Milch aus mindestens einem Behälter und zugeführte Luft von einer Pumpe als ein Milch-/Luftgemisch angesaugt, durch einen Durchlauferhitzer gefördert und dabei erwärmt wird und erwärmt durch eine Drosseleinrichtung zu einem Milchschaum umgewandelt zu einem Auslass gefördert. Ferner sieht das Verfahren vor, dass das Milch-/Luftgemisch druckseitig der Pumpe durch einen als Dickschichtheizung mit einem Widerstandselement, dessen Temperatur regelbar ist, ausgebildeten Durchlauferhitzer erwärmt und zu Milchschaum umgewandelt wird, und in dem Durchlauferhitzer in dem Milch-/Luftgemisch mittels der Drosseleinrichtung ein Gegendruck erzeugt wird, wobei die Strömungscharakteristik stromabwärts der Drosseleinrichtung durch einen Leitungsabschnitt mit einem Innendurchmesser anpassbar ist, welcher von demjenigen der Leitung stromaufwärts der Drosseleinrichtung verschieden ist.

Erfindungsgemäss ist vorgesehen, dass druckseitig der Pumpe durch die Drosseleinrichtung ein Gegendruck in dem Milch-/Luftgemisch erzeugt wird. Die so optimale Komprimierung des Milch-/Luftgemisches bewirkt die Erzeugung eines feinporigen Schaums. Dies basiert zumindest teilweise auf die in dem Durchlauferhitzer eintretende Wirkung des von der nachgeschalteten Drosseleinrichtung erzeugten Gegendrucks, welcher der Bildung grösserer Luftblasen in dem zu erwärmenden Milch-/Luftgemisch entgegensteht. Ferner kann die Temperaturregelung in dem Durchlauferhitzer vereinfacht werden und wird exakter.

Die erfindungsgemässe Vorrichtung zur Erzeugung von Milchschaum mit einstellbarer Temperatur gemäss dem Verfahren zur Erzeugung von Milchschaum mit einstellbarer Temperatur umfasst eine Pumpe zum Fördern von Milch aus mindestens einem Behälter zu einem Auslass, eine Luftzufuhr zum Zuführen von Luft, einen Durchlauferhitzer und eine Drosseleinrichtung. Dieser Grundaufbau entspricht im Wesentlichen bekannter Vorrichtungen. Die Vorrichtung sieht darüber hinaus vor, dass druckseitig der Pumpe der als Dickschichtheizung mit einem elektrischen Widerstandselement, dessen Temperatur regelbar ist, ausgebildete Durchlauferhitzer und stromabwärts des Durchlauferhitzers die Drosseleinrichtung angeordnet sind und Innendurchmesser der Leitung stromaufwärts und eines Leitungsabschnitts stromabwärts der Drosseleinrichtung verschieden sind. Durch diese erfindungsgemässe Anordnung wird erreicht, dass der in der Drosseleinrichtung erzeugte Gegendruck auch sich vorteilhaft in dem Durchlauferhitzer auswirkt. Insbesondere kann so feinere Luftblasen auch in dem erwärmten Milch-/Luftgemisch erzielt werden. Vorteilhaft wird auch die Temperatursteuerung des Durchlauferhitzers begünstigt.

Erfindungsgemäss ist ein Durchlauferhitzer vorgesehen, in welchem die in dem Leitungssystem durch die Pumpe geförderte Milch bzw. das Milch-Luftgemisch auf eine gewünschte einstellbare Temperatur erwärmt wird.

Erfindungsgemäss ist der Durchlauferhitzer als Dickschichtheizung mit einem elektrischen Widerstandsheizelement ausgebildet, dessen Temperatur regelbar ist. Die Dickschichtheizung umfasst ein Wärmeübertragungselement zum Übertragen der durch das elektrische Widerstandsheizelement erzeugten Wärme auf die zu erwärmende Flüssigkeit, insbesondere auf ein Milch-/Luftgemisch. Das Wärmeübertragungselement stellt einen Strömungsweg für die zu erwärmende Flüssigkeit bereit, beispielsweise in Form eines spiralförmigen Durchlaufwegs. Das Milch-/Luftgemisch, welches dem Durchlauferhitzer zugeleitet wird, strömt hierbei entlang eines von aussen nach innen verlaufenden spiralförmigen Durchlaufwegs, wobei es auf eine gewünschte, einstellbare Temperatur erwärmt wird. Ferner sind an geeigneter Stelle Temperatursensoren vorgesehen, welche mit einer Steuereinheit in Verbindung stehen. Mit einer derartigen Dickschichtheizung ist eine schnelle Temperaturregelung möglich, bei gleichzeitiger günstiger Kosten- und Energieeffizienz.

Die in der erfindungsgemässen Vorrichtung angeordnete Drosseleinrichtung ist ausgebildet, die Milchschaumbildung zumindest teilweise zu unterstützen. Stromabwärts der Pumpe, d.h. auf der Druckseite, liegt bereits ein Milch-/Luftgemisch vor, welches eine gewünschte einstellbare Temperatur nach dem Durchlauferhitzer hat und anschliessend in der Drosseleinrichtung zu einem stabilen Milchschaum umgewandelt wird, d.h. weiter aufgeschäumt wird. Dabei erzeugt die Drosseleinrichtung an einer Drosselstelle einen Gegendruck, so dass in der Gesamtwirkung das zugeführte Milch-/Luftgemisch zu einem Milchschaum gewünschter Konsistenz und Qualität aufgeschäumt wird. An der Drosselstelle stellt sich nach dem Venturi-Prinzip an einer verjüngten Stelle mit erhöhter Strömungsgeschwindigkeit ein geringerer Druck als stromaufwärts davon ein, es kommt zu einer weitgehend schlagartigen Entspannung und einer damit verbunden Blasenerzeugung.

Durch die erfindungsgemässe Anordnung der Drosseleinrichtung stromabwärts des Durchlauferhitzers wird in diesem auch ein Gegendruck erzeugt, so dass sich die in dem erwärmten Milch-/Luftgemisch vorhandenen Luft- bzw. Gasblasen nicht ungehindert ausdehnen können. Der entstehende Schaum ist feinporiger. Darüber hinaus ergibt sich vorteilhaft, dass die Wärmeübertragung in dem Durchlauferhitzer verbessert ist, da die vorhandenen Luft- bzw. Gasblasen kleiner sind und somit die ansonsten schlechtere Wärmeübertragung der Luft vermieden wird. Vorteilhaft kann demnach der Durchlauferhitzer schneller und effektiver geregelt werden.

Die Drosseleinrichtung ist einstellbar oder fest eingestellt ausgebildet, um an einer Drosselstelle den Strömungsweg des Milch-/Luftgemischs zu verengen, insbesondere eine Drosselfunktion durch eine lokale Querschnittsverjüngung, z.B. mit einem progressiven Verlauf, zu erzeugen. Dabei kann die Querschnittsverjüngung mit veränderlicher freier Querschnittsfläche oder mit einer fest eingestellten freien Querschnittsfläche ausgebildet sein. Eine Querschnittsverjüngung der bereitgestellten Durchflussfläche kann mittels Düse, Blende, z.B. Lochblende oder Ringspaltblende, Ventil, z.B. Nadelventil oder Drosselventil erreicht werden. Bei einer flexiblen Leitung kann auch eine Klemmvorrichtung, beispielsweise eine Schlauchklemme, vorgesehen sein. Eine Verjüngung entspricht einer verringerten Durchflussquerschnittsfläche gegenüber der unmittelbar stromaufwärts liegenden Leitung. Stromabwärts der Drosselstelle ist eine Erweiterung bzw. Ausdehnung des Durchflussquerschnitts vorgesehen, z.B. mit einem degressiven Verlauf. Der Abstand zwischen Verengung und Erweiterung des Leitungsquerschnitts beträgt maximal 0,5 bis 2 mm.

Zur Erzeugung eines hochwertigen Schaums liegt der Durchmesser des Durchflussquerschnitts an der Drosselstelle in einem Bereich von 0,5 bis 2 mm.

In einer Ausführungsform ist die Drosseleinrichtung von einer Steuereinheit steuerbar, d.h. der Durchflussquerschnitt ist einstellbar. Es hat sich gezeigt, dass die Schaumkonsistenz abhängig von der Temperatur ist.

Die Erzeugung eines hochwertigen, feinporigen Schaums basiert auf einem abgestimmten Zusammenwirken von Pumpe, Drosseleinrichtung, Leitungsquerschnitt und Leitungslänge, wobei insbesondere die stromabwärts der Drosseleinrichtung bestehenden Druckverhältnisse von Bedeutung für die Schaumqualität sind, wobei die Drücke in einem Bereich zwischen 4 und 15 bar liegen.

Erfindungsgemäss ist vorgesehen, dass eine Steuereinheit Pumpe, Ventile, Durchlauferhitzer und eventuell Drosseleinrichtung steuert.

Erfindungsgemäss ist stromabwärts der Drosseleinrichtung ein Leitungsabschnitt vorgesehen, dessen Querschnitt und Länge bis zum Auslass derart gewählt ist, dass die Schaumqualität des Milchschaums verbessert wird. Dieser Leitungsabschnitt stellt eine Art Beruhigungsstrecke dar, in der die Luft in dem Milch-/Luftgemisch, welche zumindest teilweise noch in Form von grossen Blasen vorliegen kann, in feine Blasen dispergiert. Darüber hinaus beeinflusst der Leitungsabschnitt stromabwärts der Drosseleinrichtung auch die Strömung des Milch-/Luftgemischs, welche noch teilweise turbulente Anteile aufweist, in dem der laminare Anteil der Strömung des Gemisches erhöht wird.

Dieser Leitungsabschnitt ist mit einem konstanten Innendurchmesser ausgebildet, welcher von dem stromaufwärts vorliegenden Innendurchmesser verschieden ist, und erstreckt sich über eine Länge zwischen 0,5 bis 2 m, bevorzugt bei ca. 1,5 m. In diesem Leitungsabschnitt findet ein gradueller Druckabfall mit geringer Druckdifferenz pro Längeneinheit statt.

### Kurzbeschreibung der Zeichnungen

Weitere bevorzugte Merkmale und bevorzugte Ausführungsformen werden im Folgenden anhand von Ausführungsbeispielen und der Figur erläutert. Dabei zeigt:

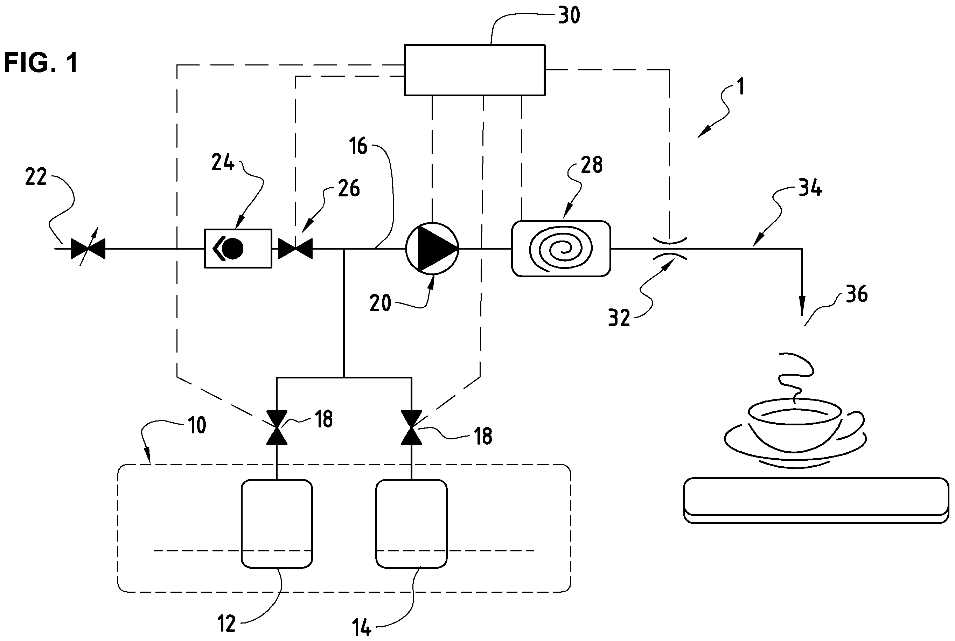

Fig. 1 eine schematische Darstellung einer erfindungsgemässen Vorrichtung zur Erzeugung von Milchschaum;

### Detaillierte Beschreibung der Ausführungsformen der Erfindung

Figur 1 zeigt schematisch eine Vorrichtung 1 zur Erzeugung von Milchschaum mit einer einstellbaren Temperatur. Wie in Figur 1 dargestellt ist, sind in einem mit 10 bezeichneten Bereich ein erster Behälter 12 und ein zweiter Behälter 14 angeordnet, in welchen Milch eines ersten Typs und eines zweiten Typs bevorratet sind. Vorzugsweise ist der Bereich 10 gekühlt. Die ersten und zweiten Behälter 12, 14 sind mit einer ersten Leitung 16 verbunden, wobei jeweils in der Zuleitung zu Leitung 16 ein Ventil 18 vorgesehen ist, so dass wahlweise Milch oder Milchersatz aus einem der ersten und zweiten Behälter 12, 14 entnommen werden kann. Die Leitung 16 verbindet die ersten und zweiten Behälter 12, 14 mit einer Pumpe 20, welche eingerichtet ist, um Milch bzw. Milchersatz und Luft in der Leitung 16 zu fördern. Die Luft wird über eine Luftzufuhreinrichtung 22, beispielsweise aus der Umgebung, angesaugt und über ein Rückschlagventil 24 und ein regelbare Ventileinrichtung 26 zur Saugseite der Pumpe 20 gefördert. Druckseitig schliesst sich an die Pumpe 20 ein Durchlauferhitzer 28 an, welche vorzugsweise als Durchlauferhitzer in Form einer Dickschichtheizung ausgebildet ist. Ein derartiger Durchlauferhitzer sieht z.B. einen spiralförmigen Strömungsweg für die mit Luft angereicherte Milch, d.h. für das Milch-/Luftgemisch, vor. Entlang des Strömungswegs wird das Milch-/Luftgemisch bei aktivierter Dickschichtheizung auf eine gewünschte einstellbare Temperatur erwärmt, welche beispielsweise durch eine umfasste Steuereinheit 30 geregelt wird. mittels der Steuereinheit 30 kann die Erzeugung einer Portion Milchschaum mit einer gewünschten einstellbaren Temperatur veranlasst werden, wobei die Luftmenge, die Menge und der Typ der Milch ebenfalls bestimmt werden kann.

Ferner ist Fig. 1 zu entnehmen, dass stromabwärts des Durchlauferhitzers 28 eine Drosseleinrichtung 32 angeordnet ist, welche aus dem bereits vorhandenen, eventuell erwärmten Milch-/Luftgemisch einen stabilen und homogenen Milchschaum erzeugt. Die Drosseleinrichtung 32 kann als Düse, Blende, feste oder einstellbare Düse ausgebildet sein, wobei an einer Drosselstelle eine Verengung der Durchflussquerschnittsfläche vorgesehen ist. Zusätzlich zu der Engstelle kann stromabwärts davon die Drosseleinrichtung 32 eine Erweiterung des Durchflussquerschnitts aufweisen. Insbesondere kann die Drosseleinrichtung 32 als eine durch die Steuereinheit 30 oder eine andere Einrichtung einstellbare Drossel ausgebildet sein. Die Drosseleinrichtung 32 erzeugt einen Gegendruck, welcher sich auch in dem in dem Durchlauferhitzer 28 umfassten Strömungsweg bemerkbar macht. Dadurch wird erreicht, dass sich die mit höherer Temperatur tendenziell zur Ausdehnung neigenden und damit sich vergrössernden Luftblasen daran gehindert werden. Kleinere Luftblasen in einem Milch-/Luftgemisch erleichtern die Erwärmung des Gemischs, welches ansonsten durch Luft als schlechter Wärmeleiter negativ beeinflusst ist.

Eine einstellbare Drosseleinrichtung 32 ermöglicht in Zusammenhang mit der zugeführten Luftmenge und der Temperatur ein optimiertes Vermischen von Luft und Milch zu einem Milch-/Luftgemisch und eine Dispersion kleiner Luftblasen in dem Gemisch, welche für eine Schaumqualität stehen.

Zwischen Drosseleinrichtung 32 und einem Auslass 36, an welchem Milchschaum in der gewünschten Temperatur oder auch kalte oder warme Milch beispielsweise in eine bereitgestellte Tasse abgebbar ist, ist ein Leitungsabschnitt 34 vorgesehen, welcher auch als Beruhigungsstrecke betrachtet werden kann. In diesem Leitungsabschnitt 34 wird Einfluss genommen auf die Strömungscharakteristik des durchfliessenden Milchschaums. Insbesondere ist der Leitungsabschnitt 34 mit einem konstanten Innendurchmesser (Dᵢ) realisiert, der vorzugsweise von demjenigen Innendurchmesser stromaufwärts der Drosseleinrichtung 32 verschieden ist. Die Länge des Leitungsabschnitts 34 liegt in einem Bereich von 0,5 bis 2 m, bevorzugt bei ca. 1,5 m.

## Patentansprüche

1. Verfahren zur Erzeugung von Milchschaum mit einstellbarer Temperatur, wobei Milch aus mindestens einem Behälter (12, 14) und zugeführte Luft von einer Pumpe (20) als ein Milch-/Luftgemisch angesaugt, durch einen Durchlauferhitzer (28) gefördert und dabei erwärmt wird, und anschliessend in einer Drosseleinrichtung (32) zu einem Milchschaum umgewandelt und zu einem Auslass (36) gefördert wird, **dadurch gekennzeichnet, dass** das Milch-/Luftgemisch druckseitig der Pumpe (20) in einem als Dickschichtheizung mit einem elektrischen Widerstandselement, dessen Temperatur regelbar ist, ausgebildeten Durchlauferhitzer (28) erwärmt und zu Milchschaum umgewandelt wird, und in dem Durchlauferhitzer (28) in dem Milch-/Luftgemisch durch die Drosseleinrichtung (32) ein Gegendruck erzeugt wird, wobei die Strömungscharakteristik stromabwärts der Drosseleinrichtung (32) durch einen Leitungsabschnitt (34) mit einem Innendurchmesser anpassbar ist, welcher von demjenigen der Leitung (16) stromaufwärts der Drosseleinrichtung (32) verschieden ist.

2. Vorrichtung (1) zur Erzeugung von Milchschaum mit einstellbarer Temperatur gemäss dem Verfahren nach Anspruch 1, umfassend eine Pumpe (20) zum Fördern von Milch aus mindestens einem Behälter (12, 14) in Leitung (16, 34) zu einem Auslass (36), eine Luftzufuhr (22) zum Zuführen von Luft in die Leitung (16), einen Durchlauferhitzer (28) und eine Drosseleinrichtung (32), **dadurch gekennzeichnet, dass** der Durchlauferhitzer (28) druckseitig der Pumpe (20) und die Drosseleinrichtung (32) stromabwärts des Durchlauferhitzers (28) angeordnet sind, wobei der Durchlauferhitzer (28) als eine Dickschichtheizung mit einem elektrischen Widerstandselement ausgebildet ist, dessen Temperatur regelbar ist und Innendurchmesser der Leitung (16) stromaufwärts und eines Leitungsabschnitts (34) stromabwärts der Drosseleinrichtung (32) verschieden sind.

3. Vorrichtung (1) nach Anspruch 2, **dadurch gekennzeichnet, dass** der Durchlauferhitzer (28) einen spiralförmigen Durchlaufweg für das zu erwärmende Milch-/Luftgemisch vorsieht.

4. Vorrichtung (1) nach Anspruch 2 oder 3, **dadurch gekennzeichnet, dass** die Drosseleinrichtung (32) einstellbar ist.

5. Vorrichtung (1) nach einem der Ansprüche 2 bis 4, **dadurch gekennzeichnet, dass** eine Steuereinheit (30) vorgesehen ist, um die Pumpe (20), Ventile (18, 26), den Durchlauferhitzer (28) und/oder die Drosseleinrichtung (32) zu steuern.

6. Vorrichtung (1) nach Anspruch 5, **dadurch gekennzeichnet, dass** die Steuereinheit (30) eine Durchflussquerschnittsfläche der Drosseleinrichtung (28) einstellt.

7. Vorrichtung (1) nach Anspruch 6, **dadurch gekennzeichnet, dass** die Durchflussquerschnittsfläche der Drosseleinrichtung (28) in Abhängigkeit der Temperatur des erwärmten Milch-/Luftgemischs durch die Steuereinheit (30) geregelt ist.

8. Vorrichtung (1) nach einem der Ansprüche 2 bis 7, **dadurch gekennzeichnet, dass** stromabwärts der Drosseleinrichtung (32) ein Leitungsabschnitt (34) mit einer Länge von 0,5 bis 2 m zum Auslass (36) vorgesehen ist.

## Claims

1. Method for production of milk foam with adjustable temperature, whereby milk from at least one container (12, 14) and air delivered from a pump (20) are suctioned as milk/air mixture, conveyed through a continuous-flow heater (28) and thereby heated, and the mixture is subsequently converted into milk foam in a throttle device (32) and is conveyed to an outlet (36), **characterized in that** the milk/air mixture is heated on the pressure side of the pump (20) in a continuous flow heater (28) designed as a thick-film heater with an electrical resistance element, the temperature of which is controllable, and is converted to milk foam, and a counterpressure is generated in the continuous-flow heater (28) in the milk/air mixture by the throttle device (32), whereby the flow characteristic downstream of the throttle device (32) is adaptable by means of a line section (34) with an inner diameter which is different from that of the line (16) upstream of the throttle device (32).

2. Device (1) for production of milk foam with adjustable temperature according to the method according to claim 1, comprising a pump (20) for conveying milk from at least one container (12, 14) in line (16, 34) to an outlet (36), an air supply (22) for delivering air into the line (16), a continuous flow heater (28) and a throttle device (32), **characterized in that** the continuous flow heater (28) is disposed on the pressure side of the pump (20) and the throttle device (32) is disposed downstream from the continuous flow heater (28), whereby the continuous flow heater (28) is designed as a thick film heater with an electrical resistance element whose temperature is adjustable and the inner diameter of the line (16) upstream and of a line section (34) downstream of the throttle device (32) are different.

3. Device (1) according to claim 2, **characterized in that** the continuous flow heater (28) provides a spiral-shaped passageway for the milk/air mixture to be heated.

4. Device (1) according to claim 2 or 3, **characterized in that** the throttle device (32) is adjustable.

5. Device (1) according to one of the claims 2 to 4, **characterized in that** a control unit (30) is provided to control the pump (20), valves (18, 26), the continuous flow heater (28) and/or the throttle device (32).

6. Device (1) according to claim 5, **characterized in that** the control unit (30) sets a flow-through cross-sectional area for the throttle device (28).

7. Device (1) according to claim 6, **characterized in that** the flow-through cross-sectional area of the throttle device (28) is regulated by the control unit (30) as a function of the temperature of the heated milk/air mixture.

8. Device (1) according to one of the claims 2 to 7, **characterized in that** a line section (34) with a length of 0.5 to 2 m to the outlet (36) is provided downstream of the throttle device (32).

## Revendications

1. Procédé destiné à la production de mousse de lait à une température ajustable, où le lait d'au moins un récipient (12, 14) et l'air délivré par une pompe (20) sont aspirés comme un mélange de lait/air, puis transmis par un chauffage à flux continu (28) et chauffé de cette manière, et ensuite converti en une mousse de lait dans un dispositif d'étranglement (32), et est acheminé vers une sortie (36), **caractérisé en ce que** le mélange lait/air est chauffé du côté admission de la pompe (20) via un chauffage à flux continu (28) conçu comme un chauffage à couche épaisse comportant un élément de résistance électrique dont la température réglable et est converti en mousse de lait, et qu'une contre-pression est générée dans le chauffage à flux continu (28) dans le mélange lait/air par le dispositif d'étranglement (32), la caractéristique d'écoulement en aval du dispositif d'étranglement (32) pouvant être adaptée au moyen d'une section de conduite (34) possédant un diamètre interne qui est différent de celui de la ligne (16) en amont du dispositif d'étranglement (32).

2. Dispositif (1) destiné à la production de mousse de lait à une température ajustable selon le procédé selon la revendication 1, comprenant une pompe (20) pour transmettre le lait d'au moins un récipient (12, 14) vers une sortie (36) via des conduites (16, 34), un approvisionnement en air (22) pour délivrer de l'air dans la conduite (16), un chauffage à flux continu (28) et un dispositif d'étranglement (32), **caractérisé en ce que** le chauffage à flux continu (28) est disposé côté admission de la pompe (20) et le dispositif d'étranglement (32) est disposé en aval vis-à-vis du chauffage à flux continu (28), le chauffage à flux continu (28) étant conçu comme un chauffage à couche épaisse avec un élément de résistance électrique dont la température peut être ajustée dont le diamètre interne en amont de la conduite (16) et d'une section de conduite (34) en aval du dispositif d'étranglement (32) sont différents.

3. Dispositif (1) selon la revendication 2, **caractérisé en ce que** le chauffage à flux continu (28) possède une voie de passage en forme de spirale pour le mélange de lait/air à chauffer.

4. Dispositif (1) selon la revendication 2 ou 3, **caractérisé en ce que** le dispositif d'étranglement (32) est réglable.

5. Dispositif (1) selon l'une des revendications 2 à 4, **caractérisé en ce qu'**une unité de commande (30) est fournie pour contrôler la pompe (20), des valves (18, 26), le chauffage à flux continu (28) et/ou le dispositif d'étranglement (32).

6. Dispositif (1) selon la revendication 5, **caractérisé en ce que** l'unité de commande (30) ajuste une section transversale de l'écoulement pour le chauffage à flux continu (28).

7. Dispositif (1) selon la revendication 6, **caractérisé en ce que** la section transversale de l'écoulement du chauffage à flux continu (28) peut être régulée par l'unité de commande (30) en fonction de la température du mélange de lait chauffé/air.

8. Dispositif (1) selon l'une des revendications 2 à 7, **caractérisé en ce qu'**une section de conduite (34) possédant une longueur de 0.5 à 2 m est aménagée en aval du dispositif d'étranglement (32) vers la sortie (36).
